# EUROPEAN PATENT APPLICATION

(11) **EP 4 316 821 A1**
(43) Date of publication of application: **07.02.2024**
(21) Application number: 22781085.0
(22) Date of filing: 30.03.2022
(51) Int. Cl.: B32B 27/00, B32B 27/18, B32B 27/32

(54) **DECORATIVE SHEET, AND DECORATIVE MEMBER IN WHICH SAME IS USED**

(30) Priority: 31.03.2021 JP 2021061745; 28.03.2022 JP 2022052612
(71) Applicant: Dai Nippon Printing Co., Ltd., Tokyo 162-8001 (JP)
(72) Inventor: ENDOH, Takashi, Tokyo 162-8001 (JP); KOMURASAKI, Mayuko, Tokyo 162-8001 (JP); FURUTA, Satoshi, Tokyo 162-8001 (JP)
(74) Representative: Müller-Boré & Partner Patentanwälte PartG mbB
(86) International application number: PCT/JP2022/015967
(87) International publication number: WO 2022/210875

(57) **Abstract**

A decorative sheet including a core layer and a surface protective layer. The surface protective layer includes a resin, an ultraviolet absorber, and particles. The indentation depth measured in conformity with an Erichsen test method prescribed in JIS Z 2247:2006 is 4.0 mm or more.

## Description

### Cross Reference to Related Applications

This appreciation is based on and claims priority to Japanese Patent Application No. 2021-061745 filed on March 31, 2021, and Japanese Patent Application No. 2022-052612 filed on March 28, 2022, the entire contents of which are incorporated herein by reference.

### Technical Field

The present invention relates to a decorative sheet and a decorative member including the decorative sheet.

### Background Art

Decorative sheets have been used for decorating or protecting the surface of an interior or exterior member for buildings, an interior or exterior member for vehicles, such as automobiles, a furniture piece, a fixture member, a home appliance, or the like. The decorative sheet includes, for example, a core layer and a surface protective layer disposed thereon.

When such a decorative sheet is used outdoors or, even indoors, in a place exposed to sunlight, such as a window-side place, a change in color tone and the degradation of resins may occur due to the impacts of ultraviolet radiation. Accordingly, there has been proposed a decorative sheet produced by adding an ultraviolet absorber to the decorative sheet in order to enhance weather resistance.

Benzophenone-based ultraviolet absorbers and benzotriazole-based ultraviolet absorbers have been used as an ultraviolet absorber. However, these ultraviolet absorbers have not been entirely satisfactory in terms of performance. Specifically, achieving a sufficient degree of weather resistance by using a benzophenone-based or benzotriazole-based ultraviolet absorber requires addition of a large amount of the ultraviolet absorber, which increases bleeding of the ultraviolet absorber. Moreover, since the benzophenone-based ultraviolet absorbers and benzotriazole-based ultraviolet absorbers become severely degraded with time, it has been difficult to maintain weather resistance over a long period of time.

There has recently been proposed a decorative sheet including a triazine-based ultraviolet absorber, such as a hydroxyphenyltriazine compound, in order to address the issues regarding benzophenone-based ultraviolet absorbers and benzotriazole-based ultraviolet absorbers (e.g., PTLs 1 and 2).

### Citation List

### Patent Literature

PTL 1: Japanese Patent No. 5196042
PTL 2: Japanese Patent No. 5540589

### Summary of Invention

### Technical Problem

The decorative sheets described in PTLs 1 and 2 are capable of reducing the bleedout and have suitable long-term weather resistance, compared with a decorative sheet including a benzophenone-based or benzotriazole-based ultraviolet absorber.

However, although the decorative sheets described in PTLs 1 and 2 are suitable in terms of a reduction in the bleedout and maintenance of long-term weather resistance compared with the decorative sheets known in the related art, they may fail to satisfy the above performance properties when used in a severe environment. Thus, there have been demands for further improvement.

Accordingly, an object of the present disclosure is to provide a decorative sheet and a decorative member that may reduce the bleedout and degradation of long-term weather resistance and limit degradation of appearance.

### Solution to Problem

In order to achieve the above object, the present disclosure provides the decorative sheet and decorative member described below.
1. A decorative sheet including a core layer and a surface protective layer, the surface protective layer including a resin, an ultraviolet absorber, and particles, wherein an indentation depth measured in conformity with an Erichsen test method prescribed in JIS Z 2247:2006 is 4.0 mm or more.
2. A decorative member including an adherend and the decorative sheet according to 1.

### Advantageous Effects of Invention

According to the present disclosure, a decorative sheet and a decorative member that may reduce the bleedout and degradation of long-term weather resistance and limit degradation of appearance may be provided.

### Brief Description of Drawings

[Fig. 1] Fig. 1 is a cross-sectional view of a decorative sheet according to an embodiment of the present disclosure.
[Fig. 2] Fig. 2 is a cross-sectional view of a decorative sheet according to an embodiment of the present disclosure.

### Description of Embodiments

An embodiment of the present disclosure (hereinafter, may be referred to as "this embodiment") is described below. In the description, when a numerical range is referred to, the values described with "or more", "or less", and "to" can be combined with one another, and the values described in Examples below can be used as the upper or lower limit for a numerical range.

### [Decorative Sheet]

A decorative sheet according to this embodiment includes a core layer and a surface protective layer. The surface protective layer includes a resin, an ultraviolet absorber, and particles. The indentation depth measured in conformity with an Erichsen test method prescribed in JIS Z 2247:2006 (hereinafter, also referred to simply as "indentation depth") is 4.0 mm or more.

As described above, reductions in the bleedout and degradation of long-term weather resistance in further severe conditions are anticipated. It is known that the bleedout or degradation of long-term weather resistance may occur in the following situations:
(i) In the case where a decorative sheet is used to decorate the surface of an interior or exterior member for buildings or the like as described above to produce a decorative member, in processing steps (i.e., various processing steps, such as wrapping of an adherend, vacuum forming, and V-cutting), that is, in a step of laminating the decorative sheet on an adherend, lamination is performed using an external force. This may cause flaws or cracks to be formed in the surface of the decorative sheet.
   Not only in the processing steps as described in (i) above, but also after the production of the decorative member,
(ii) In the case where the adherend is composed of a hard member, such as a metal, in the storage of the decorative members, flaws or cracks may be formed in the decorative sheets as a result of the decorative members coming into contact with one another.
(iii) In the case where the decorative member is used, in particular, as an exterior member over a long period of time, flaws or cracks may be formed in the surface thereof as a result of grains of sand, fallen leaves, or the like coming into contact with the surface.

In consideration of the knowledge about the situations listed as (i) to (iii) above, the inventors of the present invention focused on the fact that there is a commonality between the causes of the bleedout and the degradation of long-term weather resistance in that flaws or cracks are formed in the surface of the decorative sheet. Accordingly, the inventors considered that the flaws or cracks cause the bleedout and the degradation of long-term weather resistance by the following mechanisms in each of the above cases.

As for the case (i) above, as a result of the various processing steps, such as wrapping of an adherend, vacuum forming, and V-cutting, the decorative sheet is subjected to deformation by external forces, such as bending, stretching, and strain. Consequently, formation of minute flaws or cracks (microcracks), delamination, or the like may occur in the decorative sheet in the processing steps.

If such minute flaws or cracks (microcracks) or delamination is present inside the decorative sheet, the minute flaws or cracks (microcracks) or delamination gradually grows with time while the decorative sheet is in service as a part of the decorative member after the processing. This increases the possibility of partial detachment of the surface protective layer. In the portions from which the surface protective layer is detached, the function of the surface protective layer to protect the core layer, etc. is lost. Furthermore, the bleedout of the ultraviolet absorber used as a weathering agent occurs. It is considered that this degrades the weather resistance of the entire decorative sheet. It is considered that the above issue is particularly significant in the case where the decorative sheet is exposed outdoors.

As for the cases (ii) and (iii) above, even if the minute flaws or cracks (microcracks) are not formed in the processing steps unlike the case (i) above, it is considered that flaws or cracks (microcracks) may be formed due to various factors while the decorative sheet is in service as a part of the decorative member after the processing. In this case, if the use of such a decorative sheet is continued, the minute flaws or cracks (microcracks) or delamination gradually grows with time and, consequently, the possibility of partial detachment of the surface protective layer is increased, as in the case (i) above. This results in the loss of the function of the surface protective layer to protect the core layer, etc. In addition, the bleedout of the ultraviolet absorber used as a weathering agent occurs. It is considered that this degrades the weather resistance of the entire decorative sheet.

In light of the above findings, it is considered that the bleedout and the degradation of long-term weather resistance may be reduced by enhancing the resistance of the decorative sheet to formation of flaws and cracks (microcracks). It is also considered that the resistance of the decorative sheet to formation of flaws and cracks (microcracks) may be enhanced by, for example, increasing the hardness of the surface protective layer and thereby enhancing scuff resistance.

The possibility of flaws or cracks (microcracks) being formed when the decorative sheet is used as a structural element of the decorative member as in the cases (ii) and (iii) above can be reduced by increasing the hardness of the surface protective layer. However, if the hardness is excessively high, the surface protective layer is likely to become embrittle and the possibility of cracks or flaws (microcracks) being formed in the processing steps as described in the case (i) above is increased. Scuff resistance is basically a property of a decorative sheet that is laminated on an adherend and serves as a part of the decorative member as in the cases (ii) and (iii) above and is different from a property with which the possibility of cracks or flaws being formed in the processing steps as described in the case (i) above is reduced. It is considered that enhancing scuff resistance may be disadvantageous in terms of the reduction in the possibility of cracks or flaws being formed in the processing steps.

On the other hand, when the hardness of the surface protective layer is low, scuff resistance becomes degraded. In such a case, the possibility of flaws or cracks (microcracks) being formed when the decorative sheet is used as a part of the decorative member is increased, while the possibility of cracks or flaws being formed in the processing steps is reduced.

As described above, completely opposite properties of the surface protective layer are required for reducing the formation of flaws or cracks (microcracks) particularly in terms of hardness, depending on whether the flaws or cracks are formed in the processing steps or when the decorative sheet is used as a part of the decorative member. Although it is considered that the hardness of the surface protective layer needs to be maintained at a certain level or more for reducing the formation of cracks or flaws, it is difficult to reduce the formation of cracks or flaws by only increasing or reducing the hardness of the cured product of a resin composition used for forming the surface protective layer.

The Erichsen test method is a test method commonly used for determining the plastic deformation property of a metal sheet in forming, that is, in particular, deep drawing. The Erichsen test method is a test method widely used in the field of metal forming. Note that the term "indentation depth" commonly used in the measurement conducted by the Erichsen test method refers to the depth of indentation (also referred to as "Erichsen value") made by a punch having a spherical end being pressed against a specimen (an object to be analyzed) clamped between a blank holder and a die until a penetrating crack is formed, while the term "indentation depth" used in the present disclosure refers to the depth of indentation made by the punch being pressed until fine cracks are formed in the surface protective layer as described below. The Erichsen test method may also be used for determining the adhesion and peel strengths of paint coatings, the strengths of coatings, and the like.

In consideration of the principle of the Erichsen test method, the inventors of the present invention considered that the concept "indentation depth" may be interpreted as an index of a property similar to "flexibility", that is, resistance to various forming processes, such as bending, which the decorative sheet may have in addition to the hardness described above. The inventors also considered that, when the decorative sheet has the property similar to "flexibility", the decorative sheet may have high resistance to various forming processes, such as bending, that is, high resistance to the external forces described in (i) above, and that imparting the property similar to "flexibility" to the decorative sheet may reduce all the possibility of flaws and cracks being formed in the surface of the decorative sheet as described in (i) to (iii) above.

The inventors of the present invention conducted further studies on the basis of the above findings and consequently found that the formation of flaws or cracks as described in (i) to (iii) above can be reduced by limiting the indentation depth of the decorative sheet which is measured in the Erichsen test to 4.0 mm or more. Thus, the inventors conceived the decorative sheet according to this embodiment that may reduce the bleedout and degradation of long-term weather resistance and limit degradation of appearance by reducing the formation of flaws or cracks.

### indentation Depth>

The decorative sheet according to this embodiment requires that an indentation depth measured by conducting the Erichsen test using the decorative sheet as a specimen be 4.0 mm or more. If the above indentation depth is less than 4.0 mm, the flaws or cracking are likely to be formed under the conditions as described in (i) to (iii) above and, consequently, the bleedout and the degradation of long-term weather resistance occur. In addition, the appearance becomes degraded.

The indentation depth is preferably 4.5 mm or more and is more preferably 5.0 mm or more in order to reduce the bleedout and the degradation of long-term weather resistance and limit the degradation of appearance. The upper limit for the indentation depth is not set; the indentation depth is preferably maximized. In consideration of improvement of surface properties, such as scuff resistance, weather resistance, and contamination resistance, the efficiency of production of the decorative sheet, and the like, the upper limit is set to 15.0 mm or less.

In the present description, the "indentation depth" is measured in conformity with an Erichsen test method prescribed in JIS Z 2247:2006. Note that the term "indentation depth" used in the present disclosure refers to the depth of indentation made by a punch having a spherical end being pressed against a specimen (an object to be analyzed) clamped between a blank holder and a die from the core layer-side of the decorative sheet until fine cracks are formed in the surface protective layer. Specifically, the indentation depth is measured using an Erichsen tester (conforming to JIS B 7729:2005) by the method described in Examples below.

In this embodiment, the indentation depth can be adjusted primarily by changing the material constituting the core layer, the thickness of the core layer, the material (i.e., the type of the resin) constituting the surface protective layer, or the thickness of the surface protective layer. In the case where an optional layer other than the core layer or the surface protective layer, which may be formed as needed, is used, the indentation depth can also be adjusted by, for example, changing the material constituting the optional layer or the thickness of the optional layer.

It becomes easy to adjust the indentation depth of the decorative sheet according to this embodiment by employing the preferable aspects described below as materials constituting the above layers, the thicknesses of the layers, and the like.

### <Layer Structure of Decorative Sheet>

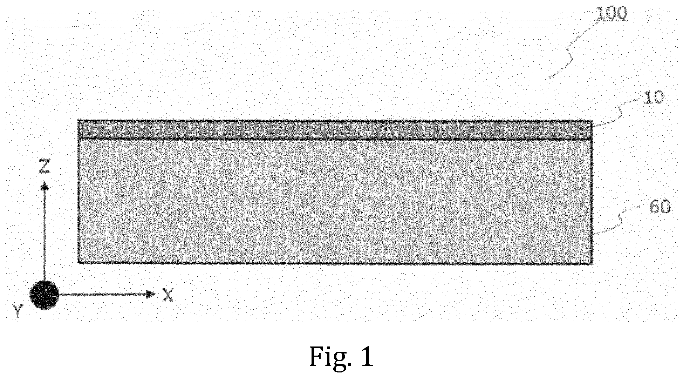

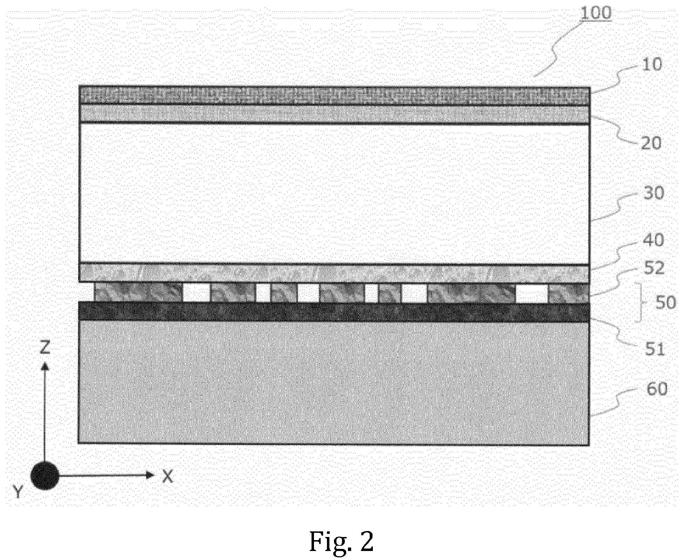

Fig. 1 is a cross-sectional view of a typical example of a decorative sheet 100 according to this embodiment. Fig. 2 is a cross-sectional view of a preferable example of the decorative sheet 100 according to this embodiment. In Figs. 1 and 2, the Z-axis direction represents the thickness direction, and the plane formed by the X- and Y-axes represents the plane viewed when the decorative member is observed in the Z-axis direction.

The decorative sheet 100 illustrated in Fig. 1 includes a core layer 60 and a surface protective layer 10 disposed thereon. The decorative sheet 100 illustrated in Fig. 2 includes a core layer 60, a surface protective layer 10, and a decorative layer 50, an adhesive layer 40, a transparent resin layer 30, and a primer layer 20 interposed therebetween.

The decorative sheet according to this embodiment may have any type of layer structure including a fundamental structure consisting of a core layer and a surface protective layer disposed thereon, in accordance with application, required performance, and the like. As illustrated in Fig. 2, the decorative sheet according to this embodiment may include a decorative layer, an adhesive layer, a transparent resin layer, and a primer layer interposed between the core layer and the surface protective layer as layers other than the core layer or the surface protective layer. Preferable examples of possible layer structures of the decorative sheet according to this embodiment include the layer structures (1) to (7) below, that is, layer structures constituted by a core layer, a surface protective layer, and one or more layers selected from a decorative layer, an adhesive layer, a transparent resin layer, and a primer layer interposed between the core layer and the surface protective layer. In the embodiment illustrated in Fig. 1, the decorative sheet 100 has the layer structure (2) below. In the embodiment illustrated in Fig. 2, the decorative sheet 100 has the layer structure (1) below.

In the structures (1) to (7) below, the symbol "/" means the interface between the layers. It is needless to say that the decorative sheet according to this embodiment is not limited by the layer structures (1) to (7) below.
(1) Core layer 60/Decorative layer 50/Adhesive layer 40/Transparent resin layer 30/Primer layer 20/Surface protective layer 10
(2) Core layer 60/Surface protective layer 10
(3) Core layer 60/Primer layer 20/Surface protective layer 10
(4) Core layer 60/Adhesive layer 40/Transparent resin layer 30/Surface protective layer 10
(5) Core layer 60/Decorative layer 50/Surface protective layer 10
(6) Core layer 60/Adhesive layer 40/Transparent resin layer 30/Decorative layer 50/Surface protective layer 10
(7) Core layer 60/Adhesive layer 40/Transparent resin layer 30/Decorative layer 50/Primer layer 20/Surface protective layer 10

Each of the layers constituting the decorative sheet according to this embodiment is described below.

### <Core layer>

The core layer is a layer that serves as a support for a surface protective layer included in the decorative sheet according to this embodiment and also makes it easy to bond the decorative sheet to an adherend in the case where the decorative sheet is used for decorating a decorative member. Examples of the core layer include a film, a sheet, and a plate which are composed of paper, a plastic, a metal, a woven fabric, a nonwoven fabric, wood, a ceramic industry-related material, or the like.

Planar core layers having a predetermined thickness are commonly referred to as "film", "sheet", and "plate" in order of increasing thickness. However, since it is not particularly necessary to distinguish them by thickness in the present disclosure, in the present description, the above terms are considered interchangeable with one another without any particular essential differences. It should be also noted that the difference of the terms (difference in thickness) does not affect the interpretation of the scope of the present disclosure. In the present description, the term "plastic sheet" refers to a film, sheet, or plate composed of a plastic.

Among the core layers described above, a plastic sheet is preferable in consideration of, for example, ease of adjustment of the indentation depth and an increase in ease of handling of the entire decorative sheet.

Specific examples of the resin constituting the plastic sheet include the following thermoplastic resins: polyolefin resins, such as a polypropylene resin, a polyethylene resin, a polymethylpentene resin, a polyolefin-based thermoplastic elastomer, and an ionomer; vinyl chloride resins, such as polyvinyl chloride, polyvinylidene chloride, and a vinyl chloride-vinyl acetate copolymer; polyester resins, such as polyethylene terephthalate (PET), polybutylene terephthalate (PBT), polyethylene naphthalate (PEN), an ethylene glycol-terephthalic acid-isophthalic acid copolymer, and a polyester-based thermoplastic elastomer; acrylic resins, such as polymethyl (meth)acrylate, polybutyl (meth)acrylate, and a methyl (meth)acrylate-butyl (meth)acrylate copolymer; polyamide resins, such as nylon 6 and nylon 66; cellulose-based resins, such as cellulose triacetate, cellophane, and celluloid; styrene-based resins, such as polystyrene, an acrylonitrile-styrene copolymer, and an acrylonitrile-butadiene-styrene resin (ABS resin); and polyvinyl alcohol, an ethylene-vinyl acetate copolymer, an ethylene-vinyl alcohol copolymer, a polycarbonate resin, a polyarylate resin, and a polyimide resin.

Among these, one or more selected from a polyolefin resin, a vinyl chloride resin, a polyester resin, and an acrylic resin are preferable in consideration of ease of adjustment of indentation depth, weather resistance, water resistance, printability, forming and processing suitability, price, and the like.

Among these, a polyolefin resin is particularly suitable because it enables the advantageous effects of the present disclosure to be further readily produced and, in particular, makes it easy to adjust the indentation depth. Further specifically, the polyolefin resin is preferably, for example, a polyethylene resin or a polypropylene resin. A polypropylene resin is preferable.

The polyethylene resin may be either a homopolymer of ethylene, that is, polyethylene (low-density, medium-density, or high-density), or a copolymer of ethylene with another comonomer (e.g., an α-olefin, such as propylene, 1-butene, 1-hexene, or 1-octene; vinyl acetate, or vinyl alcohol) copolymerizable with ethylene. The above polyethylene resins may be used alone or in combination of two or more.

Similarly to the polyethylene resin, the polypropylene resin may be either a homopolymer of propylene, that is, polypropylene, or a copolymer of propylene with another comonomer (e.g., an α-olefin, such as ethylene, 1-butene, 1-hexene, or 1-octene; vinyl acetate, or vinyl alcohol) copolymerizable with propylene. The above polypropylene resins may be used alone or in combination of two or more.

Among the above polyolefin resins, polyethylene (low-density, medium-density, or high-density), polypropylene, an ethylene-propylene copolymer, and a propylene-butene copolymer are preferable, and polypropylene is more preferable.

The core layer may be either colorless and transparent or colored in consideration of graphical design function.

For coloring the core layer, a colorant, such as a dye or a pigment, may be added to the core layer. Among these colorants, a pigment that readily reduces fading is preferable. Examples of the pigment include white pigments, such as Chinese white, white lead, lithopone, titanium dioxide (titanium white), precipitated barium sulfate, and barite; black pigments, such as carbon black, an azomethineazo-based black pigment, and a perylene-based black pigment; red pigments, such as red lead, iron oxide red, quinacridone red, and polyazo red; yellow pigments, such as chrome yellow, zinc yellow (zinc yellow, type 1 and zinc yellow, type 2), isoindolinone yellow, and a nickel-azo complex; and blue pigments, such as ultramarine blue and Prussian blue (i.e., potassium iron ferrocyanide).

The thickness of the core layer is not limited. In the case where the core layer is a plastic sheet, the thickness of the core layer is preferably 20 to 320 µm, is more preferably 40 to 160 µm, and is further preferably 40 to 100 µm in consideration of, in particular, ease of adjustment of the indentation depth. From the same viewpoints as above, in the case where the core layer is a paper sheet, the basis weight is preferably 20 to 150 g/m² and is more preferably 30 to 100 g/m².

The shape of the core layer is not limited to tabular and may be a special shape, such as a three-dimensional shape.

In order to increase the adhesion between the core layer and another layer included in the decorative sheet or an adherend, one or both surfaces of the core layer may be subjected to a physical surface treatment, such as an oxidation treatment or a roughening treatment; a chemical surface treatment; or the like. Alternatively, a primer layer may be formed on the core layer.

The core layer may include an ultraviolet absorber in order to enhance long-term weather resistance.

Examples of the ultraviolet absorber include a benzotriazole-based ultraviolet absorber, a benzophenone-based ultraviolet absorber, a triazine-based ultraviolet absorber, and a hydroxyphenyltriazine-based ultraviolet absorber. Among these, a hydroxyphenyltriazine-based ultraviolet absorber is preferable. The hydroxyphenyltriazine-based ultraviolet absorber, which is preferably included in the core layer, is described below. In this embodiment, the above ultraviolet absorbers may be used alone or in combination of two or more.

In the case where the core layer includes the ultraviolet absorber, the content of the ultraviolet absorber is preferably 0.1 to 5 parts by mass, is more preferably 0.2 to 3 parts by mass, and is further preferably 0.3 to 2 parts by mass relative to 100 parts by mass of the resin included in the core layer.

The core layer may include a light stabilizer in order to enhance weather resistance. Preferable examples of the light stabilizer include hindered amine-based light stabilizers, such as a piperidinyl sebacate-based light stabilizer.

The ultraviolet absorber and light stabilizer that can be suitably used as constituents of the core layer may each have a reactive functional group having an ethylenic double bond, such as a (meth)acryloyl group, a vinyl group, or an allyl group, in the molecule.

The core layer may include an additive as needed. Examples of the additive other than any of the above-described weathering agents, such as the ultraviolet absorber and light stabilizer, include inorganic particles, such as particles of calcium carbonate or clay; a flame retardant, such as magnesium hydroxide; an antioxidant; a lubricant; a blowing agent; and an antioxidant. The amount of the additive added is not limited and may be set appropriately in accordance with the required properties and the like, so as to fall within a range in which the indentation depth, the surface properties, and the like are not impaired.

### <Surface Protective Layer>

The surface protective layer is a layer that includes a resin and an ultraviolet absorber and protects the surface of the decorative sheet according to this embodiment. In particular, the surface protective layer is a layer required to have at least scuff resistance in order to reduce the formation of flaws or cracks (microcracks) and also required to have surface properties, such as weather resistance and contamination resistance.

The surface protective layer is composed of, for example, a resin composition including a resin component, an ultraviolet absorber, and particles (hereinafter, also referred to as "surface protective layer-forming resin composition"). In order to enhance the surface properties, such as scuff resistance, weather resistance, and contamination resistance, the resin composition preferably includes a curable resin as a resin component, and the surface protective layer is preferably composed of a cured product of a resin composition including a curable resin, an ultraviolet absorber, and particles. That is, the resin included in the surface protective layer may be a cured resin formed by curing a curable resin.

As described above, the indentation depth of the decorative sheet can be adjusted by changing the material (i.e., the type of the resin component) constituting the surface protective layer or the thickness of the surface protective layer. Therefore, it is considered that the structure of the surface protective layer, that is, in particular, the resin component, is one of the factors that directly affect the indentation depth of the decorative sheet. Thus, it is important to select the resin component included in the resin composition that is to constitute the surface protective layer not only such that the hardness of the cured product of the resin composition is increased to a certain level or more, scuff resistance is enhanced accordingly, and the likelihood of the flaws or cracks (microcracks) being formed when the decorative sheet is used as a part of the decorative member is reduced consequently, but also such that flexibility is enhanced and the likelihood of the flaws or cracks (microcracks) being formed in the processing steps is also reduced accordingly, that is, such that the indentation depth of the entire decorative sheet falls within the predetermined range.

Further details of the resin component constituting the surface protective layer are described below.

### (Resin Component)

As described above, the resin component is preferably a curable resin in order to enhance the surface properties, that is, in particular, scuff resistance. In particular, a thermosetting resin and an ionizing radiation-curable resin are preferable. An ionizing radiation-curable resin is more preferable in consideration of ease of adjustment of the indentation depth, the possibility of the bleedout and the degradation of long-term weather resistance being reduced by the adjustment of the indentation depth, and the possibility of the degradation of appearance being limited by the adjustment of the indentation depth.

### (ionizing Radiation-Curable Resin)

The term "ionizing radiation-curable resin" used herein refers to a resin having a group that causes crosslinking and curing upon being irradiated with ionizing radiation (hereinafter, such a group may be referred to as "ionizing radiation-curable functional group"), that is, a resin capable of crosslinking and curing upon being irradiated with ionizing radiation. A resin composition including the ionizing radiation-curable resin as a resin component is a resin composition that crosslinks and cures upon being irradiated with ionizing radiation and may be referred to as "ionizing radiation-curable resin composition".

Preferable examples of the ionizing radiation-curable functional group, which is a group that causes crosslinking and curing upon being irradiated with ionizing radiation, include functional groups having an ethylenic double bond, such as a (meth)acryloyl group, a vinyl group, and an allyl group.

In the present description, the term "ionizing radiation" refers to an electromagnetic wave or charged particle beam having an energy quantum with which polymerization or crosslinking of molecules can be performed. While ultraviolet radiation (UV) and electron beam (EB) are commonly used, examples of the ionizing radiation also include electromagnetic waves, such as an X-ray and an γ-ray; and charged particle beams, such as an α-beam and an ion beam.

Examples of the ionizing radiation-curable resin include an electron beam-curable resin and an ultraviolet radiation-curable resin. Among these, an electron beam-curable resin is preferable because, for example, it can be used for coating without using a solvent, therefore reduces environment loads, and also eliminates the need to use a polymerization initiator. Since the surface protective layer-forming resin composition preferably includes a weathering agent, such as an ultraviolet absorber, in order to enhance weather resistance, using the electron beam-curable resin composition more readily increases crosslinking density than using the ultraviolet radiation-curable resin composition and is advantageous in terms of scuff resistance, contamination resistance, and the like among the surface properties. Furthermore, the indentation depth can be readily adjusted. As a result, long-term weather resistance can be enhanced, and the degradation of appearance can be further limited.

The ionizing radiation-curable compound can be selected appropriately from, specifically, the polymerizable monomers and polymerizable oligomers commonly used for ionizing radiation-curable resins.

Among the polymerizable monomers, a (meth)acrylate-based monomer having a radical-polymerizable unsaturated group in the molecule is preferable. A polyfunctional (meth)acrylate monomer is particularly preferable. Note that the term "(meth)acrylate" used herein refers to "acrylate or methacrylate".

Examples of the polyfunctional (meth)acrylate monomer include a (meth)acrylate monomer having two or more ionizing radiation-curable functional groups per molecule, the functional groups including at least a (meth)acryloyl group.

In order to increase ease of adjustment of the indentation depth and enhance the surface properties, such as scuff resistance, weather resistance, and contamination resistance, the number of functional groups included in the polyfunctional (meth)acrylate monomer is preferably 2 or more and 8 or less, is more preferably 2 or more and 6 or less, is further preferably 2 or more and 4 or less, and is still further preferably 2 or more and 3 or less. The above polyfunctional (meth)acrylates may be used alone or in combination of two or more.

Examples of the polymerizable oligomers include a (meth)acrylate oligomer having two or more ionizing radiation-curable functional groups per molecule, the functional group including at least a (meth)acryloyl group. Examples thereof include a urethane (meth)acrylate oligomer, an epoxy (meth)acrylate oligomer, a polyester (meth)acrylate oligomer, a polyether (meth)acrylate oligomer, a polycarbonate (meth)acrylate oligomer, and an acrylic (meth)acrylate oligomer.

Examples of the polymerizable oligomers further include a highly hydrophobic polybutadiene (meth)acrylate-based oligomer including a polybutadiene oligomer and a (meth)acrylate group attached to the side chain of the polybutadiene oligomer; a silicone (meth)acrylate-based oligomer having a polysiloxane bond attached to the backbone; an aminoplast resin (meth)acrylate-based oligomer produced by modifying an aminoplast resin having a number of reactive groups in the small molecule; and an oligomer including the molecule of a novolac epoxy resin, a bisphenol epoxy resin, an aliphatic vinyl ether, or an aromatic vinyl ether and a cationic polymerizable functional group attached to the molecule.

A cyclohexyl (meth)acrylate oligomer may also be used.

The above polymerizable oligomers may be used alone or in combination of two or more.

In order to increase ease of adjustment of the indentation depth and enhance the surface properties, such as scuff resistance, weather resistance, and contamination resistance, a urethane (meth)acrylate oligomer, an epoxy (meth)acrylate oligomer, a polyester (meth)acrylate oligomer, a polyether (meth)acrylate oligomer, a polycarbonate (meth)acrylate oligomer, and an acrylic (meth)acrylate oligomer are preferable; a urethane (meth)acrylate oligomer and a polycarbonate (meth)acrylate oligomer are more preferable; and a urethane (meth)acrylate oligomer is further preferable.

The number of functional groups included in the polymerizable oligomer is preferably 2 or more and 8 or less, and the upper limit is more preferably 6 or less, is further preferably 4 or less, and is still further preferably 3 or less, in order to increase ease of adjustment of the indentation depth, to reduce the bleedout and degradation of long-term weather resistance and limit the degradation of appearance by adjusting the indentation depth, and to enhance the surface properties, such as scuff resistance, weather resistance, and contamination resistance.

The weight-average molecular weight of the polymerizable oligomer is preferably 1,100 or more, is more preferably 1,250 or more, is further preferably 1,500 or more, is still further preferably 1,750 or more, and is particularly preferably 1,900 or more, in order to increase ease of adjustment of the indentation depth, to reduce the bleedout and degradation of long-term weather resistance and limit the degradation of appearance by adjusting the indentation depth, and to enhance the surface properties, such as scuff resistance, weather resistance, and contamination resistance. The weight-average molecular weight of the polymerizable oligomer is preferably 7,500 or less, is more preferably 7,000 or less, and is further preferably 6,000 or less.

The term "weight-average molecular weight" used herein refers to an average molecular weight determined by conducting measurement by gel permeation chromatography (GPC) analysis and making a conversion using standard polystyrenes.

The ionizing radiation-curable resin composition may include a monofunctional (meth)acrylate in order to, for example, reduce the viscosity of the ionizing radiation-curable resin composition. The monofunctional (meth)acrylates may be used alone or in combination of two or more.

### (Thermosetting Resin)

A thermosetting resin is a resin that can be cured by heat. A resin composition that includes a thermosetting resin as a resin component may be considered as a thermosetting resin composition that can be cured by heat.

Examples of the thermosetting resin include an acrylic polyol resin, an acrylic resin, a urethane resin, a phenolic resin, an urea melamine resin, an epoxy resin, an unsaturated polyester resin, and a silicone resin. The above thermosetting resin preferably has two or more functional groups, such as hydroxyl groups, amino groups, carboxyl groups, or epoxy groups, in the molecule. The thermosetting resin composition may include, in addition to the above curable resin, a curing agent as needed. Examples of the curing agent include an isocyanate-based compound. The isocyanate-based compound is preferably a polyisocyanate compound having two or more isocyanate groups in the molecule.

Examples of the polyisocyanate compound include tolylene diisocyanate (TDI), 4,4'-diphenylmethane diisocyanate (MDI), xylylene diisocyanate (XDI), hydrogenated compounds thereof, isophorone diisocyanate (IPDI), and hexamethylene diisocyanate (HDI).

The proportion of the curable resin to all the resin components included in the surface protective layer-forming resin composition is preferably 50% by mass or more, is more preferably 70% by mass or more, is further preferably 80% by mass or more, and is still further preferably 90% by mass or more in order to increase ease of adjustment of the indentation depth and reduce the bleedout and degradation of long-term weather resistance and limit the degradation of appearance by adjusting the indentation depth. For the same reasons as above, the proportion of the curable resin is preferably maximized, and the upper limit is not set. Thus, the proportion of the curable resin is preferably 100% by mass, that is, the surface protective layer preferably consists of a cured product of the surface protective layer-forming resin composition.

For adjusting the indentation depth, the surface protective layer-forming resin composition may include, for example, a thermoplastic resin as a resin component. That is, the surface protective layer may include a thermoplastic resin. Examples of the thermoplastic resin include the thermoplastic resins described above as examples of the resin constituting the plastic sheet used as the core layer.

### (Ultraviolet Absorber)

In order to enhance long-term weather resistance, the surface protective layer preferably includes an ultraviolet absorber, that is, the surface protective layer-forming resin composition preferably includes an ultraviolet absorber.

Examples of the ultraviolet absorber include a benzotriazole-based ultraviolet absorber, a benzophenone-based ultraviolet absorber, a triazine-based ultraviolet absorber, and a hydroxyphenyltriazine-based ultraviolet absorber. Among these, a hydroxyphenyltriazine-based ultraviolet absorber is preferable. In this embodiment, the above ultraviolet absorbers may be used alone or in combination of two or more.

The hydroxyphenyltriazine-based ultraviolet absorber is, for example, the ultraviolet absorber represented by General Formula (I) below.

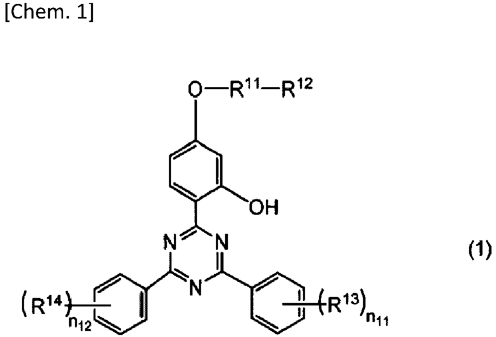

In General Formula (1), R¹¹ represents a single bond or a divalent organic group; R¹² represents a hydrocarbon group, an ester group represented by -C(=O)OR¹⁵, an acyloxy group represented by -O-C(=O)R¹⁶, or an alkoxy group represented by -OR¹⁷; R¹³, R¹⁴, R¹⁵, R¹⁶, and R¹⁷ each independently represent a monovalent organic group; and n₁₁ and n₁₂ each independently represent an integer of 0 to 5.

The hydroxyphenyltriazine-based ultraviolet absorber, which has a large molecular structure as illustrated by General Formula (1), has a molecular structural property of being not likely to be lost from the core layer or the surface protective layer by bleedout due to steric hindrance. Therefore, long-term weather resistance is enhanced. The advantageous effects of using the hydroxyphenyltriazine-based ultraviolet absorber, that is, the reduction of the bleedout and improvement of long-term weather resistance, are further enhanced when the hydroxyphenyltriazine-based ultraviolet absorber is included in a decorative sheet having the predetermined indentation depth.

The divalent organic group represented by R¹¹ is preferably, for example, an aliphatic hydrocarbon group, such as an alkylene group or an alkenylene group, in consideration of weather resistance. The number of carbon atoms included in the aliphatic hydrocarbon group is preferably 1 or more. The upper limit is preferably 20 or less, is more preferably 12 or less, is further preferably 8 or less, and is particularly preferably 4 or less. The alkylene and alkenylene groups may be linear, branched, or cyclic and are preferably linear or branched.

Examples of the monovalent organic group represented by R¹² include an alkyl group, an alkenyl group, a cycloalkyl group, an aryl group, and arylalkyl group. An alkyl group is preferable. The number of carbon atoms included in the alkyl group is preferably 1 or more, is more preferably 3 or more, and is further preferably 6 or more. As for the upper limit, the above number of carbon atoms is preferably 20 or less, is more preferably 16 or less, and is further preferably 12 or less. The alkyl and alkenyl groups may be linear, branched, or cyclic, are preferably linear or branched, and are more preferably branched.

Examples of the monovalent organic groups represented by R¹³ and R¹⁴ include an alkyl group, an alkenyl group, a cycloalkyl group, an aryl group, and an arylalkyl group. An aromatic hydrocarbon group, such as an aryl group or an arylalkyl group, is preferable. An aryl group is preferable.

The number of carbon atoms included in each of the aryl groups represented by R¹³ and R¹⁴ is preferably 6 or more. As for the upper limit, the above number of carbon atoms is preferably 20 or less, is more preferably 12 or less, and is further preferably 10 or less. The number of carbon atoms included in the arylalkyl group is preferably 7 or more. The upper limit for the number of carbon atoms is preferably 20 or less, is more preferably 12 or less, and is further preferably 10 or less.

Examples of the monovalent organic groups represented by R¹⁵, R¹⁶, and R¹⁷ include an alkyl group, an alkenyl group, a cycloalkyl group, an aryl group, and an arylalkyl group. An aliphatic hydrocarbon group, such as an alkyl group or an alkenyl group, is preferable. An alkyl group is more preferable. In the case where R¹⁵, R¹⁶, and R¹⁷ are alkyl or alkenyl groups, the number of carbon atoms included in each of the alkyl or alkenyl groups is preferably 2 or more and is more preferably 4 or more. As for the upper limit, the above number of carbon atoms is preferably 20 or less, is more preferably 16 or less, is further preferably 12 or less, and is still further preferably 10 or less.

The groups represented by R¹¹, R¹², R¹³, R¹⁴, R¹⁵, R¹⁶, and R¹⁷ above may have a substituent, such as a halogen atom, a hydroxyl group, an amino group, or an alkyl group having 1 to 4 carbon atoms.

n₁₁ and n₁₂ each independently represent an integer of 0 to 5, each preferably represent an integer of 1 to 3, and each more preferably represent an integer of 1 or 2. In the case where n₁₁ and n₁₂ represent an integer of 2 or more, a plurality of R¹³'s and R¹⁴'s may be identical to or different from one another and are preferably identical to one another in consideration of ease of availability.

Among the hydroxyphenyltriazine-based ultraviolet absorbers represented by General Formula (1) above, the hydroxyphenyltriazine compounds A to C represented by Chemical Formulae (2) to (4) below, respectively, are particularly preferable.

The hydroxyphenyltriazine compound A represented by Chemical Formula (2) is a compound represented by General Formula (1) above with R¹¹ being an ethylene group, R¹² being an acyloxy group represented by -O-C(=O)R¹⁶ (where R¹⁶ represents a 3-heptyl group), and R¹³ and R¹⁴ being hydrogen atoms. For example, the hydroxyphenyltriazine compound A is available as a commercial product ("ADK STAB LA-46 (Item number)" produced by ADEKA CORPORATION).

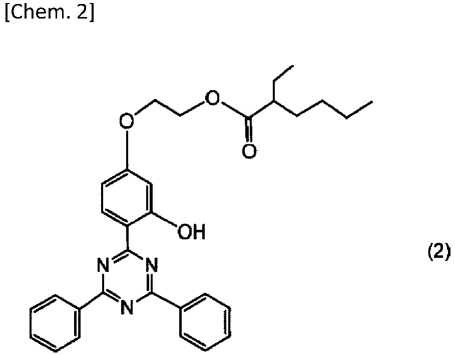

The hydroxyphenyltriazine compound B represented by Chemical Formula (3) is a compound represented by General Formula (1) above with R¹¹ being a 2,3-butylene group, R¹² being an alkoxy group represented by -OR¹⁷ (where R¹⁷ represents an isooctyl group), R¹³ and R¹⁴ being phenyl groups, and n₁₁ and n₁₂ being 1. For example, the hydroxyphenyltriazine compound B is available as a commercial product ("Tinuvin 479 (Item number)" produced by Ciba Specialty Chemicals).

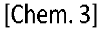

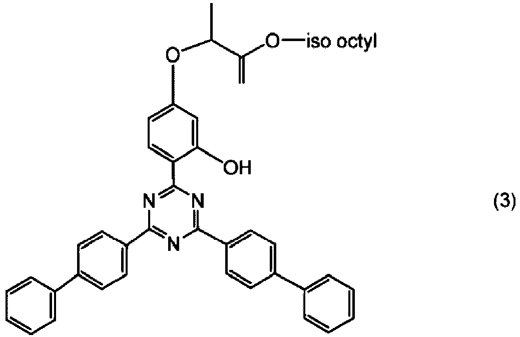

The hydroxyphenyltriazine compound C represented by Chemical Formula (4) is a compound represented by General Formula (1) above with R¹¹ being a single bond, R¹² being an isooctyl group, R¹³ and R¹⁴ being phenyl groups, and n₁₁ and n₁₂ being 1. For example, the hydroxyphenyltriazine compound C is available as a commercial product ("Tinuvin 1600 (Item number)" produced by Ciba Specialty Chemicals).

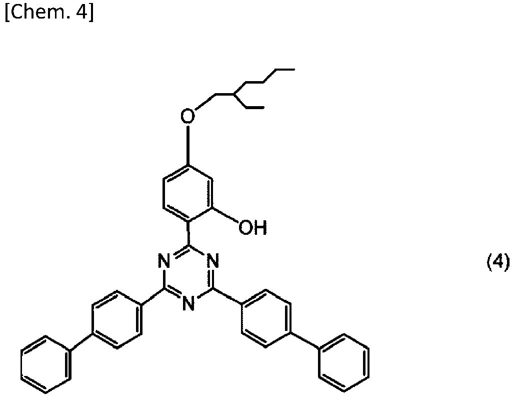

Preferable examples of the hydroxyphenyltriazine-based ultraviolet absorber also include, in addition to the hydroxyphenyltriazine compounds A to C above, the hydroxyphenyltriazine compound D represented by General Formula (5) below. The hydroxyphenyltriazine compound D represented by Chemical Formula (5) is a compound represented by General Formula (1) above with R¹¹ being a single bond, R¹² being a hexyl group, and R¹³ and R¹⁴ being hydrogen atoms. For example, the hydroxyphenyltriazine compound D is available as a commercial product ("Tinuvin 1577 (Item number)" produced by Ciba Specialty Chemicals).

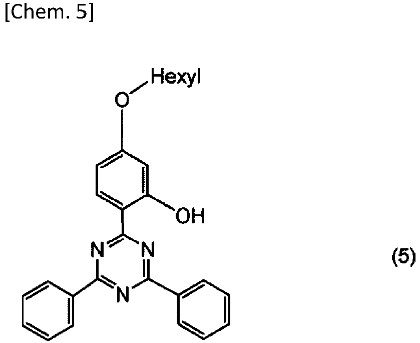

In the case where the surface protective layer includes hydroxyphenyltriazine-based ultraviolet absorbers, the combination thereof is preferably a combination of the hydroxyphenyltriazine compounds A and B in order to reduce the bleedout and enhance the long-term weather resistance.

From the same viewpoints as above, in the case where the hydroxyphenyltriazine compounds A and B are used in combination, the ratio of the content of the hydroxyphenyltriazine compound B to the total content of the hydroxyphenyltriazine compounds A and B is preferably 50% by mass or less, is more preferably 45% by mass or less, and is further preferably 40% by mass or less. As for the lower limit, the above ratio is preferably 1% by mass or more, is more preferably 5% by mass, and is further preferably 10% by mass or more.

In the case where the surface protective layer includes hydroxyphenyltriazine-based ultraviolet absorbers, the combination thereof is also preferably a combination of the hydroxyphenyltriazine compounds A and C in order to enhance the long-term weather resistance.

From the same viewpoints as above, in the case where the hydroxyphenyltriazine compounds A and C are used in combination, the ratio of the content of the hydroxyphenyltriazine compound C to the total content of the hydroxyphenyltriazine compounds A and C is preferably 50% by mass or less, is more preferably 45% by mass or less, and is further preferably 40% by mass or less. As for the lower limit, the above ratio is preferably 1% by mass or more, is more preferably 5% by mass, and is further preferably 10% by mass or more.

The ratio of the content of the hydroxyphenyltriazine-based ultraviolet absorber to the total content of the ultraviolet absorbers included in the surface protective layer is preferably 50% by mass or more, is more preferably 70% by mass or more, is further preferably 80% by mass or more, and is still further preferably 90% by mass or more. Since the proportion of the hydroxyphenyltriazine-based ultraviolet absorber in the ultraviolet absorbers is preferably maximized, the upper limit for the above ratio is not set and may be 100% by mass.

The content of the ultraviolet absorber in the surface protective layer is preferably 0.01 parts by mass or more, is more preferably 0.1 parts by mass or more, and is further preferably 0.5 parts by mass or more relative to 100 parts by mass of the resin included in the surface protective layer. When the content of the ultraviolet absorber is equal to or more than the above lower limit, the advantageous effects of using the ultraviolet absorber can be produced sufficiently. Moreover, weather resistance can be enhanced to an sufficient degree by the ultraviolet absorption performance.

As for the upper limit, the content of the ultraviolet absorber in the surface protective layer is preferably 10 parts by mass or less, is more preferably 9 parts by mass or less, is further preferably 8 parts by mass or less, and is still further preferably 7 parts by mass or less relative to 100 parts by mass of the resin included in the surface protective layer. When the content of the ultraviolet absorber is equal to or less than the above upper limit, the bleedout of the ultraviolet absorber can be reduced, the long-term weather resistance can be enhanced, and the degradation of appearance can be further limited. Moreover, weather resistance can be enhanced efficiently by the ultraviolet absorption performance.

In an embodiment, the surface protective layer may include a first ultraviolet absorber having an absorption peak at a first wavelength, a second ultraviolet absorber having an absorption peak at a second wavelength longer than the first wavelength, and a third ultraviolet absorber having an absorption peak at a third wavelength longer than the second wavelength. The above absorption peaks are based on an absorption spectrum measured using a UV-Vis-NIR spectrophotometer. When the decorative sheet according to the present disclosure has the above-described structure, the weather resistance of the decorative sheet can be maintained in an environment where it is exposed to direct sunlight at a further suitable level over a prolonged period of time. Although, in an embodiment, weather resistance may become degraded by the addition of particles to the surface protective layer, the above-described structure enhances the long-term weather resistance.

The first ultraviolet absorber has an absorption peak at a first wavelength. The first wavelength is preferably 270 nm or more and 300 nm or less, is more preferably 270 nm or more and 290 nm or less, and is further preferably 270 nm or more and 280 nm or less.

The second ultraviolet absorber has an absorption peak at a second wavelength. The second wavelength is preferably 310 nm or more and 330 nm or less and is more preferably 310 nm or more and 325 nm or less.

The third ultraviolet absorber has an absorption peak at a third wavelength. The third wavelength is preferably 340 nm or more and 370 nm or less and is more preferably 345 nm or more and 365 nm or less.

The term "absorption peak" preferably refers to the maximum absorption peak at wavelengths of 270 nm or more and 380 nm or less. For example, in the case where the first ultraviolet absorber has a plurality of absorption peaks at the above wavelengths, the maximum absorption peak preferably falls within the range of 270 nm or more and 300 nm or less.

The difference between the second and first wavelengths is preferably 10 nm or more, is more preferably 20 nm or more, and is further preferably 30 nm or more; and is preferably 60 nm or less, is more preferably 55 nm or less, and is further preferably 50 nm or less.

The difference between the third and second wavelengths is preferably 10 nm or more, is more preferably 20 nm or more, and is further preferably 30 nm or more; and is preferably 60 nm or less, is more preferably 55 nm or less, and is further preferably 50 nm or less.

The difference between the third and first wavelengths is preferably 40 nm or more, is more preferably 50 nm or more, and is further preferably 60 nm or more; and is preferably 100 nm or less, is more preferably 95 nm or less, and is further preferably 90 nm or less.

Examples of the first to third ultraviolet absorbers include a triazine-based ultraviolet absorber, a benzotriazole-based ultraviolet absorber, and a benzophenone-based ultraviolet absorber. A triazine-based ultraviolet absorber is preferable because of its excellent weather resistance and in consideration of the degree of absorbance and wavelength selectivity.

Among various triazine-based ultraviolet absorbers, a hydroxyphenyltriazine-based ultraviolet absorber is preferable in consideration of weather resistance. Specific examples of the hydroxyphenyltriazine-based ultraviolet absorber include 2-(2-hydroxy-4-[1-octyloxycarbonylethoxy]phenyl)-4,6-bis(4-phenylphenyl)-1,3,5-triazine, 2-[4-[(2-hydroxy-3-dodecyloxypropyl)oxy]-2-hydroxyphenyl]-4,6-bis(2,4-dimethylphenyl)-1,3,5-triazine, 2,4-bis[2-hydroxy-4-butoxyphenyl]-6-(2,4-dibutoxyphenyl)-1,3,5-triazine, 2-[4-[(2-hydroxy-3-tridecyloxypropyl)oxy]-2-hydroxyphenyl]-4,6-bis(2,4-dimethylphenyl)-1,3,5-triazine, 2-(4,6-diphenyl-1,3,5-triazin-2-yl)-5-[2-(2-ethylhexanoyloxy)ethoxy]phenol, 2-[4-[(2-hydroxy-3-(2'-ethyl)hexyl)oxy]-2-hydroxyphenyl]-4,6-bis(2,4-dimethylphenyl)-1,3,5-triazine, and the compound represented by the following formula.

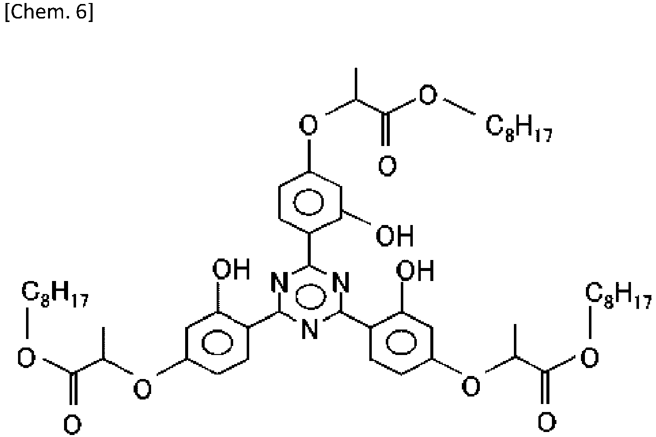

The total content of the first, second, and third ultraviolet absorbers in the surface protective layer according to an embodiment is preferably 0.5 parts by mass or more, is more preferably 1 part by mass or more, and is further preferably 2 parts by mass or more; and is preferably 10 parts by mass or less, is more preferably 8 parts by mass or less, and is further preferably 6 parts by mass or less, relative to 100 parts by mass of the resin included in the surface protective layer. When the total content of the above ultraviolet absorbers is equal to or more than the lower limit, the weather resistance of the decorative sheet may be further enhanced. When the total content of the above ultraviolet absorbers is equal to or less than the upper limit, the bleedout of the ultraviolet absorbers may be reduced.

The content of the first ultraviolet absorber in the surface protective layer according to an embodiment is preferably 0.1 parts by mass or more, is more preferably 0.2 parts by mass or more, and is further preferably 0.3 parts by mass or more; and is preferably 3 parts by mass or less, is more preferably 2 parts by mass or less, and is further preferably 1.5 parts by mass or less, relative to 100 parts by mass of the resin included in the surface protective layer. In such a case, for example, weather resistance may be further enhanced.

The content of the second ultraviolet absorber in the surface protective layer according to an embodiment is preferably 0.1 parts by mass or more, is more preferably 0.5 parts by mass or more, is further preferably 1 part by mass or more; and is preferably 8 parts by mass or less, is more preferably 6 parts by mass or less, and is further preferably 5 parts by mass or less, relative to 100 parts by mass of the resin included in the surface protective layer. In such a case, for example, weather resistance may be further enhanced.

The content of the third ultraviolet absorber in the surface protective layer according to an embodiment is preferably 0.1 parts by mass or more, is more preferably 0.2 parts by mass or more, and is further preferably 0.3 parts by mass or more; and is preferably 3 parts by mass or less, is more preferably 2 parts by mass or less, and is further preferably 1.5 parts by mass or less, relative to 100 parts by mass of the resin included in the surface protective layer. In such a case, for example, weather resistance may be further enhanced.

In an embodiment, the content of the second ultraviolet absorber in the surface protective layer is higher than the content of the first ultraviolet absorber in the surface protective layer and is higher than the content of the third ultraviolet absorber in the surface protective layer. In such a case, the surface protective layer is capable of absorbing a wide range of wavelengths and, for example, weather resistance may be further enhanced consequently.

### (Other Additives)

The surface protective layer-forming resin composition may include, in addition to the above-described resin component and ultraviolet absorber, for example, the following additives: a weathering agent, such as light stabilizer, particles, such as filler particles, an antioxidant, an ultraviolet shielding agent, a polymerization inhibitor, a crosslinking agent, an infrared absorber, an antistatic agent, an adhesion improver, a leveling agent, a coupling agent, a plasticizer, an antifoaming agent, an antiblocking agent, a lubricant, and a solvent. The surface protective layer may include the above-described additives in addition to the resin and the ultraviolet absorber.

Among the above additives, a light stabilizer is preferable in order to enhance the long-term weather resistance. The light stabilizers that can be included in the surface protective layer are the same as those described above as examples of the light stabilizer that can be included in the core layer.

In the case where the above-described resin component is an ultraviolet radiation-curable resin that can be cured by ultraviolet radiation, the surface protective layer-forming resin composition preferably includes a photopolymerization initiator, a photopolymerization accelerator, or the like as an additive. When the above composition includes these additives, the curing of the ultraviolet radiation-curable resin can be accelerated, and the indentation depth is likely to fall within the above predetermined range.

The photopolymerization initiator is, for example, one or more selected from acetophenone, benzophenone, α-hydroxyalkylphenone, Michler's ketone, benzoin, benzildimethylketal, benzoyl benzoate, α-acyl oxime ester, and a thioxanthone.

The photopolymerization accelerator reduces the inhibition of polymerization which is caused by air during curing and thereby increases the curing rate. The photopolymerization accelerator is, for example, one or more selected from a p-dimethylaminobenzoic acid isoamyl ester and a p-dimethylaminobenzoic acid ethyl ester.

The surface protective layer preferably includes particles. When the surface protective layer includes particles, the matte feeling of the surface protective layer (e.g., a graphical design function achieved by delustering) can be enhanced. The use of particles also enhances the scuff resistance of the surface protective layer.

In the case where the surface protective layer includes particles of silica or the like, fine cracks may be formed in the surface protective layer with the particles serving as origins and reduce weather resistance. Regarding this issue, the indentation depth of the decorative sheet which is measured in conformity with the Erichsen test method is limited to 4.0 mm or more. This reduces the formation of such fine cracks. That is, when the surface protective layer includes the above-described particles and the indentation depth measured by the Erichsen test method is limited to 4.0 mm or more, the surface protective layer has both matte feeling and suitable weather resistance.

Examples of the particles include particles of fillers, such as silica, talc, clay, barium sulfate, barium carbonate, calcium carbonate, and magnesium carbonate. Silica is preferable in order to, for example, enhance matte feeling, increase the degree of freedom of designing materials, such as oil absorption, particle size, and pore volume, and readily adjust properties as intended.

The average size of the particles is preferably 0.05 µm or more, is more preferably 0.1 µm or more, and is further preferably 0.2 µm or more. As for the upper limit, the average particle size is preferably 15 µm or less, is more preferably 13 µm or less, and is further preferably 10 µm or less. When the average size of the particles is equal to or more than the lower limit, the matte feeling of the surface protective layer can be further enhanced. When the average size of the particles is equal to or less than the upper limit, the likelihood of the particles detaching from the surface protective layer can be reduced.

In the present disclosure, the term "average particle size" refers to the average size (arithmetic (number) average size) of particles which is determined by observing a cross section of the decorative sheet taken in the thickness direction with a scanning electron microscope (SEM) and analyzing randomly selected 100 particles that are not aggregated with one another. Note that the term "particle size" refers to the length of the longer axis of the particle.

When the average size of the particles included in the surface protective layer is defined as A (µm) and the thickness of the surface protective layer is defined as B (µm), the ratio of A to B (i.e., A/B), is preferably 0.3 or more, is more preferably 0.5 or more, is further preferably 0.8 or more, and is particularly preferably 1.0 or more; and is preferably 3.0 or less, is more preferably 2.5 or less, and is further preferably 2.0 or less. When the above ratio is equal to or more than the lower limit, the matte feeling of the surface protective layer can be further enhanced. When the above ratio is equal to or less than the upper limit, the likelihood of the particles detaching from the surface protective layer can be reduced.

The content of the particles is preferably 5 parts by mass or more, is more preferably 10 parts by mass or more, and is further preferably 15 parts by mass or more; and, as for the upper limit, is preferably 40 parts by mass or less, is more preferably 30 parts by mass or less, and is further preferably 25 parts by mass or less, relative to 100 parts by mass of the resin component included in the surface protective layer-forming resin composition. When the content of the particles falls within the above range, the matte feeling and scuff resistance of the surface protective layer can be enhanced with efficiency. Moreover, the thixotropy of the surface protective layer-forming resin composition is improved and coating performance is enhanced accordingly.

The content of the particles is preferably 5 parts by mass or more, is more preferably 10 parts by mass or more, and is further preferably 15 parts by mass or more; and, as for the upper limit, is preferably 40 parts by mass or less, is more preferably 30 parts by mass or less, and is further preferably 25 parts by mass or less, relative to 100 parts by mass of the resin included in the surface protective layer. When the content of the particles falls within the above range, the matte feeling and scuff resistance of the surface protective layer can be enhanced with efficiency. Furthermore, the likelihood of the particles detaching from the surface protective layer can be reduced.

The thickness of the surface protective layer is preferably 1.5 µm or more and 20 µm or less, is more preferably 2 µm or more and 15 µm or less, and is further preferably 3 µm or more and 10 µm or less in order to increase ease of adjustment of the indentation depth and reduce the bleedout and degradation of long-term weather resistance and limit the degradation of appearance by adjusting the indentation depth. In addition, when the thickness of the surface protective layer falls within the above range, the surface properties, such as scuff resistance, matte feeling, weather resistance, and contamination resistance, are enhanced in a balanced manner.

### <Other Layers>

As described above, the decorative sheet according to this embodiment may include a layer other than the core layer or the surface protective layer, such as a primer layer, a transparent resin layer, a decorative layer, or an adhesive layer. The other layers, which are preferably included in the decorative sheet according to this embodiment, are described below.

### (Primer Layer)

The decorative sheet according to this embodiment preferably includes a primer layer disposed on a surface of the surface protective layer which faces the core layer. When the decorative sheet includes a primer layer, the adhesion between the core layer and the surface protective layer and, when the decorative sheet includes the transparent resin layer described below, the adhesion between the transparent resin layer and the surface protective layer are increased.

When such interlayer adhesion is increased, for example, in the case where the decorative sheet according to this embodiment is used outdoors, the possibility of delamination occurring due to solar radiation or the like is reduced and the degradation of the decorative sheet is further reduced accordingly. Furthermore, in the case where the primer layer includes the ultraviolet absorber, the long-term weather resistance may be enhanced.

The primer layer includes, for example, a resin.

Preferable examples of the resin constituting the primer layer include the following resin components: a urethane resin, an acrylic polyol resin, an acrylic resin, an ester resin, an amide resin, a butyral resin, a styrene resin, a urethane-acrylic copolymer, a polycarbonate-based urethane-acrylic copolymer (i.e., a urethane-acrylic copolymer derived from a polymer (polycarbonate polyol) having a polymer backbone including a carbonate bond and two or more hydroxyl groups attached to the terminals or side chains), a vinyl chloride-vinyl acetate copolymer resin, a vinyl chloride-vinyl acetate-acrylic copolymer resin, a chlorinated propylene resin, a nitrocellulose resin (nitrified cotton), and a cellulose acetate resin. These resins may be used alone or in combination of two or more.

The resin included in the primer layer may be a cured resin formed by adding a curing agent, such as an isocyanate-based curing agent or an epoxy-based curing agent, to the above-described resin component and crosslinking and curing the resin component. Among such cured resins, a cured resin formed by crosslinking and curing a polyol-based resin, such as an acrylic polyol resin, using an isocyanate-based curing agent is preferable, and a cured resin formed by crosslinking and curing an acrylic polyol resin using an isocyanate-based curing agent is more preferable.

The primer layer is formed using, for example, a primer layer-forming resin composition composed primarily of a resin component. The primer layer may optionally include, in addition to the resin, an additive, such as an ultraviolet absorber or a light stabilizer, as needed. That is, the primer layer may be formed using a resin composition including a resin component and an additive.

The ultraviolet absorber that may be included in the primer layer is the same as the ultraviolet absorber that may be included in the surface protective layer. The hydroxyphenyltriazine-based ultraviolet absorber is preferable similarly to the surface protective layer. The light stabilizers that may be included in the primer layer are the same as those described above as examples of the light stabilizer that may be included in the core layer.

The content of the ultraviolet absorber is preferably 0.1 to 30 parts by mass, is more preferably 1 to 25 parts by mass, and is further preferably 3 to 20 parts by mass relative to 100 parts by mass of the resin included in the primer layer. When the content of the ultraviolet absorber falls within the above range, weather resistance can be achieved with efficiency.

The thickness of the primer layer is preferably 1 µm or more and 10 µm or less and is more preferably 2 µm or more and 8 µm or less. When the thickness of the primer layer falls within the above range, the advantageous effects of forming the primer layer, that is, interlayer adhesion, can be achieved with efficiency. Moreover, the indentation depth of the decorative sheet can be readily adjusted.

The decorative sheet may include a rear-surface primer layer disposed on a side of the core layer which is opposite to the side on which the surface protective layer is present, in order to, for example, increase adhesion to an adherend.

### (Transparent Resin Layer)

The decorative sheet according to this embodiment may include a transparent resin layer interposed between the core layer and the surface protective layer in order to, for example, increase strength. When the decorative sheet includes the transparent resin layer, the indentation depth of the decorative sheet can be readily adjusted.

In the case where the decorative sheet includes the transparent resin layer, the transparent resin layer is preferably interposed between the core layer and the primer layer. In the case where the decorative sheet includes a decorative layer, the transparent resin layer is preferably interposed between the decorative layer and the surface protective layer in order to protect the decorative layer.

Examples of the resin constituting the transparent resin layer include the thermoplastic resins described above as examples of the resin constituting the plastic sheet used as the core layer. In consideration of ease of adjustment of the indentation depth, among those, a polyolefin resin is preferable, and a polypropylene resin is preferable, similarly to the core layer.

The transparent resin layer may include the above-described thermoplastic resin and may be a resin layer formed using the thermoplastic resins alone or in combination of two or more.

The content of the polyolefin resin in the transparent resin layer is preferably 50% by mass or more, is more preferably 70% by mass or more, and is further preferably 90% by mass or more of the total amount of the resins included in the transparent resin layer, in consideration of ease of adjustment of the indentation depth.

The transparent resin layer may have any level of transparency with which the core-side portion can be visually identified through the transparent resin layer. In the case where a decorative layer is present, the transparent resin layer may have any level of transparency with which the decorative layer can be visually identified. The transparent resin layer may be colored transparent or semi-transparent instead of being colorless and transparent. That is, in the present description, the concept of the term "transparency" includes colored transparent and semi-transparent, as well as colorless and transparent.

The transparent resin layer may include additives, such as a weathering agent (e.g., an ultraviolet absorber or a light stabilizer) and a colorant. The ultraviolet absorber that may be included in the transparent resin layer is the same as the ultraviolet absorber that may be included in the surface protective layer. The hydroxyphenyltriazine-based ultraviolet absorber is preferable similarly to the surface protective layer. The light stabilizers that may be included in the transparent resin layer are the same as the light stabilizers described above as examples of the light stabilizer that may be included in the core layer. The colorants that may be included in the transparent resin layer are also the same as the colorants described above as examples of the colorant that may be included in the core layer.

The content of the ultraviolet absorber is preferably 0.5 to 40 parts by mass, is more preferably 1 to 30 parts by mass, and is further preferably 5 to 25 parts by mass relative to 100 parts by mass of the resin included in the transparent resin layer. When the content of the ultraviolet absorber falls within the above range, weather resistance can be achieved with efficiency. The lower limit for the content of the ultraviolet absorber may be 0.1 parts by mass.

The thickness of the transparent resin layer is preferably 20 µm or more and 150 µm or less, is more preferably 40 µm or more and 120 µm or less, and is further preferably 50 µm or more and 100 µm or less. When the thickness of the transparent resin layer falls within the above range, the indentation depth can be readily adjusted and the advantageous effects of the transparent resin layer can be achieved, that is, the strength of the decorative sheet can be increased. Furthermore, in the case where a decorative layer is present, the decorative layer can be protected with efficiency. In the case where the transparent resin layer includes the ultraviolet absorber, weather resistance can be enhanced with efficiency.

### (Decorative Layer)

The decorative sheet according to this embodiment preferably includes a decorative layer disposed in an intended portion of the decorative sheet in order to enhance graphical design function. The portion in which the decorative layer is formed is preferably close to the core layer in order to protect the decorative layer. For example, in the case where the decorative sheet includes the primer layer, the decorative layer is preferably interposed between the core layer and the primer layer. In the case where the decorative sheet includes the transparent resin layer, the decorative layer is preferably interposed between the core layer and the transparent resin layer.

The decorative layer may be, for example, a colored layer that covers all over the surface (i.e., "solid colored layer"), a design layer formed by printing various patterns with inks and a printer, or a combination of the colored layer and the design layer.

The design (i.e., pattern) of the design layer may be a wood grain texture, such as growth rings and vessel channels of the surface of a wood plate; a stone grain texture of the surface of a stone plate, such as marble or granite; a fabric grain texture of the surface of a fabric; a leather grain texture of the surface of leather; a geometrical pattern; characters; figures; or a combination thereof.

The ink included in the decorative layer is a resin composition produced by mixing a resin component with a colorant, such as a pigment or a dye, an extender pigment, a solvent, a stabilizer, a plasticizer, a catalyst, a curing agent, an ultraviolet absorber, a light stabilizer, or the like as needed.

Examples of the resin constituting the decorative layer include a urethane resin, an acrylic polyol resin, an acrylic resin, a polyester, an amide resin, a butyral resin, a styrene resin, a urethane-acrylic copolymer, a vinyl chloride-vinyl acetate copolymer, a vinyl chloride-vinyl acetate-acrylic copolymer, a chlorinated propylene resin, a nitrocellulose resin, and a cellulose acetate resin. Various types of resins, such as a one-component curing resin and a two-component curing resin that includes a curing agent such as an isocyanate compound, can be used.

The colorant is preferably a pigment having an excellent hiding property and excellent weather resistance. The pigments described as examples in Core Layer above may be used. The content of the colorant is preferably 5 parts by mass or more and 90 parts by mass or less, is more preferably 15 parts by mass or more and 80 parts by mass or less, and is further preferably 30 parts by mass or more and 70 parts by mass or less relative to 100 parts by mass of the resin constituting the decorative layer.

The decorative layer may include additives, such as weathering agents (e.g., an ultraviolet absorber and a light stabilizer).

The ultraviolet absorber that may be included in the decorative layer is the same as the ultraviolet absorber that may be included in the surface protective layer. The hydroxyphenyltriazine-based ultraviolet absorber is preferable similarly to the surface protective layer. The light stabilizers that may be included in the transparent resin layer are the same as the light stabilizers described above as examples of the light stabilizer that may be included in the core layer.

The content of the ultraviolet absorber is preferably 0.1 to 30 parts by mass, is more preferably 1 to 25 parts by mass, and is further preferably 3 to 20 parts by mass relative to 100 parts by mass of the resin included in the decorative layer. When the content of the ultraviolet absorber falls within the above range, weather resistance can be achieved with efficiency.

The thickness of the decorative layer may be selected appropriately in accordance with the intended design and is preferably 0.5 µm or more and 20 µm or less, is more preferably 1 µm or more and 10 µm or less, and is further preferably 2 µm or more and 5 µm or less in order to hide the ground color of an adherend and enhance graphical design function.

### (Adhesive Layer)

In the case where the decorative sheet according to this embodiment includes the transparent resin layer, an adhesive layer is preferably interposed between the core layer and the transparent resin layer in order to increase the adhesion between the two layers.

In the case where the decorative sheet further includes the decorative layer interposed between the core layer and the transparent resin layer, the positional relationship between the adhesive layer and the decorative layer is not limited. For example, the decorative sheet may include the decorative layer, the adhesive layer, and the transparent resin layer in order of closest to the core layer. Alternatively, the decorative sheet may include the adhesive layer, the decorative layer, and the transparent resin layer in order of closest to the core layer.

The adhesive layer may be, for example, an adhesive agent layer. The adhesive layer may be composed of a general-purpose adhesive agent, such as an urethane-based adhesive agent, an acrylic-based adhesive agent, an epoxy-based adhesive agent, or a rubber-based adhesive agent. Among the above adhesive agents, a urethane-based adhesive agent is preferable in terms of adhesive force.

Examples of the urethane-based adhesive agent include an adhesive agent including a two-component curing urethane resin that includes a polyol compound, such as polyether polyol, polyester polyol, or acrylic polyol, and a curing agent, such as an isocyanate compound.

The thickness of the adhesive layer is preferably 0.1 µm or more and 30 µm or less, is more preferably 1 µm or more and 15 µm or less, and is further preferably 2 µm or more and 10 µm or less in order to achieve an intended adhesive force with efficiency.

### <Method for Producing Decorative Sheet>

A method for producing the decorative sheet according to this embodiment is described below taking, as an example, the decorative sheet illustrated in Fig. 2, which includes a core layer 60 and a decorative layer 50, an adhesive layer 40, a transparent resin layer 30, a primer layer 20, and a surface protective layer 10 disposed on and above the core layer 60.

The decorative sheet illustrated in Fig. 2 can be produced using a production method that includes a decorative layer formation step of forming the decorative layer on the core, an adhesive layer formation step of forming the adhesive layer, a transparent resin layer formation step of forming the transparent resin layer, a primer layer formation step of forming the primer layer, and a surface protective layer formation step of forming the surface protective layer in this order. In the case where the decorative sheet is provided with the adhesive layer, for example, the adhesive layer formation step may be conducted subsequent to the decorative layer formation step and prior to the transparent resin layer formation step.

The decorative layer formation step, the adhesive layer formation step, the primer layer formation step, and the surface protective layer formation step can be formed by applying the above-described resin compositions for forming the respective layers (for the adhesive layer, the adhesive agent) using a publicly known coating method, such as gravure coating, bar coating, roller coating, reverse roller coating, or comma coating, and subsequently performing drying and curing as needed.

The curing is described taking the surface protective layer as an example.

In the case where the resin component included in the surface protective layer-forming resin composition is a thermosetting resin, the surface protective layer can be formed by performing heating under heating conditions appropriate to the type of the thermosetting resin to cause curing.

In the case where the resin component included in the surface protective layer-forming resin composition is an ionizing radiation-curable resin, the amount of exposure of the ionizing radiation is preferably set to an amount with which the crosslinking density of the resin layer becomes saturated. The amount of exposure of the ionizing radiation is commonly selected within the range of 5 to 300 kGy (0.5 to 30 Mrad) and is preferably selected within the range of 10 to 200 kGy (1 to 20 Mrad). The source of electron beams is not limited; various electron beam accelerators, such as a Cockcroft-Walton type accelerator, a Van de Graaff-type accelerator, a resonance transformer-type accelerator, an insulated core transformer-type accelerator, a linear type accelerator, a Dynamitron type accelerator, and a highfrequency type accelerator, may be used.

In the case where ultraviolet radiation is used as ionizing radiation, light including ultraviolet radiation having wavelengths of 190 to 380 nm is impinged. The ultraviolet source is not limited; for example, a high-pressure mercury-vapor lamp, a low-pressure mercury-vapor lamp, a metal halide lamp, and a carbon arc lamp can be used.

The transparent resin layer can be formed by hot-melt extrusion of a transparent resin layer-forming resin composition or bonding a transparent resin layer-forming resin sheet by dry lamination.

For example, a decorative layer is formed by the decorative layer formation step, and an adhesive layer is formed by the adhesive layer formation step. Subsequently, a transparent resin layer-forming resin composition is laminated on the multilayer body including the core layer, the decorative layer, and the adhesive layer by hot-melt extrusion. In another case, the multilayer body including the core layer, the decorative layer, and the adhesive layer and a transparent resin layer-forming resin sheet are laminated on each other by dry lamination. Hereby, a multilayer body including the core layer, the decorative layer, the adhesive layer, and the transparent resin layer is formed. Subsequently, a primer layer-forming resin composition is applied to the transparent resin layer and cured as needed to form a primer layer. Then, a surface protective layer-forming resin composition is applied and cured as needed to form a surface protective layer. Hereby, a decorative sheet that includes the core layer and the decorative layer, the adhesive layer, the transparent resin layer, the primer layer, and the surface protective layer disposed on and above the core layer can be formed.

An intended uneven shape (i.e., uneven pattern) may be formed in (i.e., imparted to) the decorative sheet according to this embodiment by embossing or the like. In the case where embossing is performed, embossing can be performed by, for example, heating the decorative sheet preferably to 80°C or more and 260°C or less, more preferably to 85°C or more and 200°C or less, and further preferably to 100°C or more and 180°C or less and pressing an emboss plate against the decorative sheet. It is preferable to press the emboss plate against the surface protective layer-side portion of the decorative sheet.

### [Decorative Member]

A decorative member according to this embodiment includes an adherend and the decorative sheet according to this embodiment. Specifically, they are laminated on top of each other such that the surface of the adherend which is to be decorated faces the core layer-side surface of the decorative sheet.

### (Adherend)

Examples of the adherend include plate-shaped materials, such as flat and curved plates, composed of the various materials described below; three-dimensional shaped articles, such as cylinders and polygonal prisms, composed of the various materials described below; and sheets and films composed of the various materials described below.

Examples of the various materials include wood members, such as a wood veneer, a plywood, a laminated wood, and a wood fiberboard (e.g., a particle board or an MDF (medium-density fiberboard)), which are made of various types of woods such as Japanese cedar, Japanese cypress, pine, and lauan; metal members, such as iron, aluminum, copper, and an alloy including one or more of the above metals; ceramic industry-related members, such as ceramics (e.g., glass and pottery) and non-ceramic, ceramic industry-related materials (e.g., gypsum, cement, ALC (autoclaved lightweight aerated concrete), and a calcium silicate-based material); and resin members, such as a polyolefin resin (e.g., an acrylic resin, polyester, polystyrene, or polypropylene), an ABS (acrylonitrile-butadiene-styrene copolymer) resin, a phenolic resin, a vinyl chloride resin, a cellulose resin, and a rubber. The above materials can be used alone or in combination of two or more.

The adherend may be selected from the above materials appropriately in accordance with the intended use. For example, in the case where the decorative member is used for an interior or exterior member of buildings, such as a wall, a ceiling, or a flooring; or a fitting or fixture member, such as a window frame, a door, a handrail, a baseboard, a crown molding, or a molding, at least one member selected from the wood members, the metal members, and the resin members is preferably used as an adherend. In the case where the decorative member is used for an exterior member such as an entrance door, or a fitting such as a window frame or door, at least one member selected from the metal members and the resin members is preferably used as an adherend.

The thickness of the adherend may be selected appropriately in accordance with the intended use and the material used. The thickness of the adherend is preferably 0.1 mm or more and 100 mm or less, is more preferably 0.3 mm or more and 5 mm or less, and is further preferably 0.5 mm or more and 3 mm or less.

### (Adhesive Agent Layer)

The adherend and the decorative sheet are preferably bonded to each other with an adhesive agent layer interposed therebetween, in order to achieve excellent adhesion. That is, the decorative member may include the adhesive agent layer interposed between the adherend and the decorative sheet.

The adhesive agent constituting the adhesive agent layer can be a general-purpose heat-sensitive adhesive agent, pressure-sensitive adhesive agent, or the like. Examples of the adhesive agent constituting the adhesive agent layer include adhesive agents including one or more resins selected from, for example, an acrylic resin, a urethane resin, a vinyl chloride resin, a vinyl acetate resin, a vinyl chloride-vinyl acetate copolymer, a styrene-acrylic copolymer, polyester, and polyamide. Examples of the adhesive agent constituting the adhesive agent layer also include a two-component curing polyurethane-based adhesive agent and a two-component curing polyester-based adhesive agent that include an isocyanate compound or the like as a curing agent.

The thickness of the adhesive agent layer is not limited. In order to achieve excellent adhesion with efficiency, the thickness of the adhesive agent layer is preferably 1 µm or more and 100 µm or less, is more preferably 5 µm or more and 50 µm or less, and is further preferably 10 µm or more and 30 µm or less.

### (Method for Producing Decorative Member)

The decorative member can be produced by a step of laminating a decorative sheet on an adherend.

The above step is a step of laminating an adherend and the decorative sheet according to the present disclosure on top of each other such that a surface of the adherend which is to be decorated faces the core layer-side surface of the decorative sheet. Examples of the method for laminating an adherend and the decorative sheet on top of each other include a lamination method, in which the decorative sheet is laminated on a tabular adherend with an adhesive layer being interposed therebetween while a pressure is applied with a pressure roller.

In the case where a hot-melt adhesive agent (i.e., heat-sensitive adhesive agent) is used as an adhesive agent, the heating temperature is preferably 160°C or more and 200°C or less, which varies by the type of the resin constituting the adhesive agent. In the case where a reactive hot-melt adhesive agent is used, the heating temperature is preferably 100°C or more and 130°C or less. In the case where a vacuum forming process is used, the heating temperature is preferably 80°C or more and 130°C or less and is more preferably 90°C or more and 120°C or less, since it is common to perform the vacuum forming process while performing heating.

The decorative member prepared in the above-described manner may be cut as intended, and the surface or cut end of the decorative member may be subjected to any decoration process, such as a grooving or chamfering process, using a cutting machine, such as a router or cutter. The resulting article can be used for various applications, such as interior members of buildings (e.g., a wall, a ceiling, and a flooring); exterior members (e.g., an exterior wall, a soffit, a roof, a wall, and a fence); fitting and fixture members (e.g., a window frame, a door, a door frame, a handrail, a baseboard, a crown molding, and a molding); surface decorative boards of cabinets of a kitchen, a furniture piece or a home appliance, office automation equipment, and the like; and interior and exterior members of vehicles.

The present disclosure relates to, for example, [1] to [10] below.
[1] A decorative sheet including a core layer and a surface protective layer, the surface protective layer including a resin, an ultraviolet absorber, and particles, wherein an indentation depth measured in conformity with an Erichsen test method prescribed in JIS Z 2247:2006 is 4.0 mm or more.
[2] The decorative sheet according to [1], wherein the core layer includes a polyolefin resin.
[3] The decorative sheet according to [1] or [2], wherein the core layer has a thickness of 40 µm or more and 100 µm or less.
[4] The decorative sheet according to any one of [1] to [3], wherein the resin included in the surface protective layer includes a cured resin formed by curing an ionizing radiation-curable resin having two or more functional groups.
[5] The decorative sheet according to any one of [1] to [4], wherein the resin included in the surface protective layer includes a cured resin formed by curing an ionizing radiation-curable resin having a weight-average molecular weight of 1,100 or more and 7,500 or less.
[6] The decorative sheet according to any one of [1] to [5], wherein the ultraviolet absorber is a hydroxyphenyltriazine compound represented by General Formula (1) below, 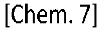 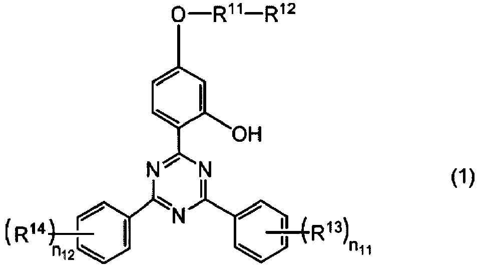 (in General Formula (1), R¹¹ represents a single bond or a divalent organic group; R¹² represents a hydrocarbon group, an ester group represented by -C(=O)OR¹⁵, an acyloxy group represented by -O-C(=O)R¹⁶, or an alkoxy group represented by -OR¹⁷; R¹³, R¹⁴, R¹⁵, R¹⁶, and R¹⁷ each independently represent a monovalent organic group; and n₁₁ and n₁₂ each independently represent an integer of 0 to 5).
[7] The decorative sheet according to any one of [1] to [6], wherein the ultraviolet absorber includes a hydroxyphenyltriazine compound A represented by Chemical Formula (2) below and a hydroxyphenyltriazine compound B represented by Chemical Formula (3) below. 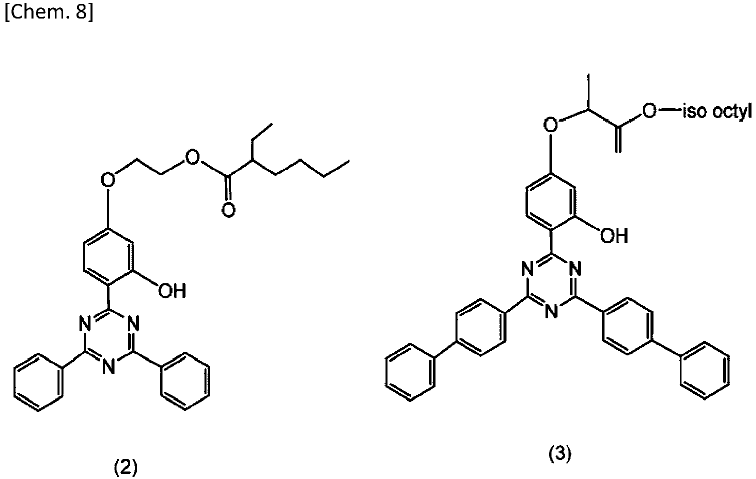
[8] The decorative sheet according to any one of [1] to [6], wherein the ultraviolet absorber includes a hydroxyphenyltriazine compound A represented by Chemical Formula (2) below and a hydroxyphenyltriazine compound C represented by Chemical Formula (4) below. 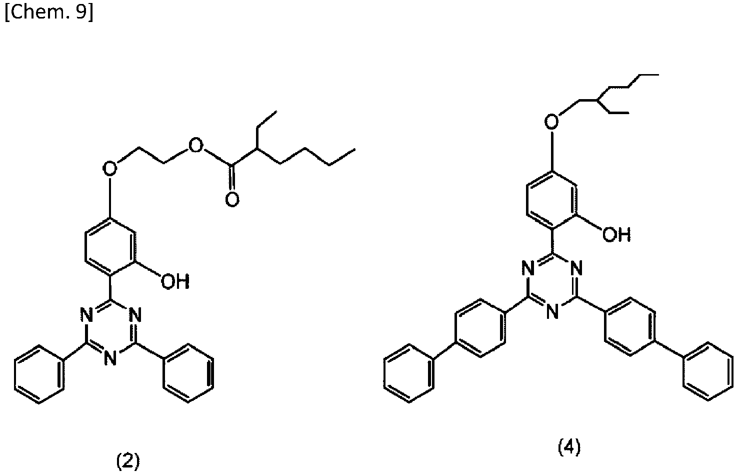
[9] The decorative sheet according to any one of [1] to [8], including one or more layers selected from a decorative layer, an adhesive layer, a transparent resin layer, and a primer layer, the one or more layers being interposed between the core layer and the surface protective layer.
[10] A decorative member including an adherend, and the decorative sheet according to any one of [1] to [9].

### EXAMPLES

Further details of the decorative sheet according to the present disclosure are described with reference to Examples below. Note that the decorative sheet according to the present disclosure is not limited by Examples below.

### [Evaluations and Measuring Methods]

### (Measurement of Indentation Depth)

A spherical punch (diameter: 20 mm) was pressed against the core layer-side surface of each of the decorative sheets (dimensions: 100 mm × 100 mm) prepared in Examples and Comparative Examples with an Erichsen testing machine (produced by Toyo Seiki Seisaku-sho, Ltd.) at a transfer rate of 12 mm/min such that a predetermined indentation depth was achieved. In the above state, a white marker was applied to the surface protective layer. Subsequently, the decorative sheet was removed from the testing machine, and the white marker was wiped off while the decorative sheet was kept flat. Then, the surface of the surface protective layer was inspected with a microscope (optical microscope, 500 times), and the distance the punch had traveled before microcracks were formed was determined as an indentation depth (mm). When the surface protective layer has cracks, the white marker remains in only the cracked portions and the presence of cracks can be confirmed.

### (Evaluation of Long-term Weather Resistance)

Each of the decorative sheets prepared in Examples and Comparative Examples was subjected to a weathering test using a Sunshine Weather Meter ("WEL-300", produced by Suga Test Instruments Co., Ltd.), in which the decorative sheet was left to stand for 4000 hours at a black panel temperature of 63°C with 120 minutes (of 120 minutes, 18 minute rainfall) being considered as 1 cycle. The 60°-gloss value of the surface protective layer-side surface of the decorative sheet was measured with a glossmeter ("micro-gloss (Model name)", produced by BYK-Gardner) in conformity with JIS K 5600-4-7:1999 prior and subsequent to the weathering test.
1: The change in gloss value which occurred during the weathering test was less than 20%.
2: The change in gloss value which occurred during the weathering test was 20% or more and less than 40%.
3: The change in gloss value which occurred during the weathering test was 40% or more.

### (Evaluations of Formation of Flaws or Cracks)

The core layer-side surface of each of the decorative sheets was bonded onto the surface of a flat aluminum plate (thickness: 0.5 mm) with a two-component curing urethane-based adhesive agent interposed therebetween. The amount of the two-component curing urethane-based adhesive agent deposited was 20 g/m². The resulting specimen was bent at a bending angle of 1 mmR using a bending tester. The presence of flaws or cracks confirmed when the bend portion (bending angle: 1 mmR) was inspected visually or with a microscope (optical microscope, 500 times) was evaluated in accordance with the following criteria. When a rating of 1 or 2 was given, the specimen was considered passed.
1: Flaws or cracks were not confirmed at all even with a microscope.
2: Flaws or cracks were not confirmed visually, but slight flaws or cracks were confirmed with a microscope.
3: Flaws or cracks were confirmed visually.

### (Evaluation of Appearance)

The surface protective layer-side surface of each of the decorative sheets prepared in Examples and Comparative Examples was subjected to a rubbing test, in which a steel wool ("BONSTAR #0000", produced by NIHON STEEL WOOL Co., Ltd.) was traveled on the surface protective layer-side surface at a load of 100 g/m² to make 20 round trips. The 60°-gloss value of the surface protective layer-side surface was measured with a glossmeter ("micro-gloss (Model name)", produced by BYK-Gardner) in conformity with JIS K 5600-4-7:1999 prior and subsequent to the rubbing test. With the gloss values measured prior and subsequent to the rubbing test being defined as G₀ and G₁, respectively, the change (G₀ - G₁)/G₀ (%) in gloss value which occurred during the rubbing test was calculated. When a rating of 1 or 2 was given, the specimen was considered passed.
1: The change in gloss value was less than 10%.
2: The change in gloss value was 10% or more and less than 20%.
3: The change in gloss value was 20% or more.

### (Example 1)

A polypropylene resin sheet having a thickness of 60 µm both surfaces of which had been subjected to a corona discharge treatment was prepared as a core layer. Onto one of the surface of the core layer, a printing ink including 30 parts by mass of a colorant relative to 100 parts by mass of a two-component curing acrylic-urethane resin, which served as a resin component, was applied by gravure printing to form a woodgrain-patterned, decorative layer having a thickness of 3 µm. An adhesive layer having a thickness of 3 µm was formed on the decorative layer using a urethane resin-based adhesive agent.

A transparent polypropylene resin composition including 0.12 parts by mass of a hydroxyphenyltriazine-based ultraviolet absorber (product name: TINUVIN 400, produced by BASF SE) relative to 100 parts by mass of a polypropylene resin was prepared. The transparent polypropylene resin composition was hot-melt extruded onto the adhesive layer using a T-die extruder to form a transparent resin layer having a thickness of 80 µm.

The surface of the transparent resin layer was subjected to a corona discharge treatment. Then, the primer layer-forming resin composition described below was applied thereto, and drying was subsequently performed in order to form a primer layer having a thickness of 4 µm. Subsequently, the surface protective layer-forming composition described below was applied thereto. The surface protective layer-forming composition was then irradiated with electron beams to be cured by crosslinking. Hereby, a surface protective layer having a thickness of 5 µm was formed.

A decorative sheet of Example 1 was formed in the above-described manner.

The decorative sheet was evaluated in terms of the above-described items. Table 1 lists the results.

### (Primer Layer-Forming Resin Composition)

- (Main agent) Composition including a polycarbonate-based urethane-acrylic copolymer and an acrylic polyol resin: 100 parts by mass
- (Curing agent) Hexamethylene diisocyanate: 5 parts by mass

### (Surface Protective Layer-Forming Resin Composition)

· Ionizing radiation-curable resin: 100 parts by mass
(difunctional urethane acrylate oligomer, weight-average molecular weight: 4,000)
· Filler: 20 parts by mass
(silica particles, average particle size: 5 µm)
· Hydroxyphenyltriazine-based ultraviolet absorber: 3 parts by mass
(product name: TINUVIN 479, produced by BASF SE)
· Light stabilizer: 3 parts by mass
(product name: TINUVIN 123, produced by BASF SE)

### (Example 2)

A decorative sheet was prepared as in Example 1, except that the ionizing radiation-curable resin included in the surface protective layer-forming resin composition was changed to a difunctional urethane acrylate oligomer (weight-average molecular weight: 2,000). The decorative sheet was evaluated in terms of the above-described items. Table 1 lists the results.

### (Example 3)

A decorative sheet was prepared as in Example 1, except that the ionizing radiation-curable resin included in the surface protective layer-forming resin composition was changed to a trifunctional urethane acrylate oligomer (weight-average molecular weight: 2,000). The decorative sheet was evaluated in terms of the above-described items. Table 1 lists the results.

### (Example 4)

A decorative sheet was prepared as in Example 1, except that the amount of filler added to the surface protective layer-forming resin composition was changed to 30 parts by mass. The decorative sheet was evaluated in terms of the above-described items. Table 1 lists the results.

### (Example 5)

A decorative sheet was prepared as in Example 4, except that the ultraviolet absorber included in the surface protective layer-forming resin composition was changed as described below. The decorative sheet was evaluated in terms of the above-described items. Table 1 lists the results.
· First ultraviolet absorber: 0.5 parts by mass
Hydroxyphenyltriazine-based ultraviolet absorber,
Product name: ADK STAB LA-46, produced by ADEKA,
Absorption peak wavelength: 275 nm
· Second ultraviolet absorber: 3 parts by mass
Hydroxyphenyltriazine-based ultraviolet absorber,
Product name: TINUVIN 479, produced by BASF SE,
Absorption peak wavelength: 322 nm
· Third ultraviolet absorber: 0.5 parts by mass
Hydroxyphenyltriazine-based ultraviolet absorber,
Product name: TINUVIN 477, produced by BASF SE,
Absorption peak wavelength: 356 nm

### (Comparative Example 1)

A decorative sheet was prepared as in Example 1, except that the ionizing radiation-curable resin included in the surface protective layer-forming resin composition was changed to a difunctional urethane acrylate oligomer (weight-average molecular weight: 1,000). The decorative sheet was evaluated in terms of the above-described items. Table 1 lists the results.

### (Comparative Example 2)

A decorative sheet was prepared as in Example 1, except that the ionizing radiation-curable resin included in the surface protective layer-forming resin composition was changed to a thermosetting resin (isocyanate curing-type acrylic resin composition including an acrylic polyol resin as a main agent and polyisocyanate as a curing agent (amount of polyisocyanate added: 10 parts by weight relative to main agent (acrylic polyol resin))). Note that the number of functional groups and the weight-average molecular weight described in Table 1 are those of the acrylic polyol resin. The decorative sheet was evaluated in terms of the above-described items. Table 1 lists the results.

### [Table 1]

**Table 1**

| | | **Examples** | | | | | **Comparative Examples** | |
|---|---|---|---|---|---|---|---|---|
| | | 1 | 2 | 3 | 4 | 5 | 1 | 2 |
| **Surface protective layer-forming resin composition** | | | | | | | | |
| **Resin component** | | A*¹ | A*¹ | A*¹ | A*¹ | A*¹ | A*¹ | B*¹ |
| **Amount used** | **mass part** | 100 | 100 | 100 | 100 | 100 | 100 | 100 |
| **Number of functional groups** | - | 2 | 2 | 3 | 2 | 2 | 2 | 2 |
| **Weight-average molecular weight** | - | 4000 | 2000 | 2000 | 4000 | 4000 | 1000 | 60000 |
| **Additive*²** | | | | | | | | |
| **Silica particles (delustering agent)** | **mass part** | 20 | 20 | 20 | 30 | 30 | 20 | 20 |
| **Indentation depth** | mm | 7 | 5 | 5 | 6 | 6 | 3 | 3 |
| **Evaluation of long-term weather resistance** | - | 1 | 1 | 2 | 2 | 1 | 3 | 3 |
| **Evaluation of formation of flaws or cracks** | - | 1 | 1 | 1 | 1 | 1 | 3 | 3 |
| **Evaluation of appearance** | - | 1 | 1 | 2 | 1 | 1 | 2 | 3 |

| | | | | | | | | |
|---|---|---|---|---|---|---|---|---|
| * 1) In Table 1, A represents an ionizing radiation-curable resin, and B represents a thermosetting resin. * 2) Among additives, only the filler is described. | | | | | | | | |

The results described in Table 1 confirm that the indentation depths of the decorative sheets prepared in Examples 1 to 5 were 7 mm, 5 mm, or 6 mm, that is, 4 mm or more, and that the decorative sheets were excellent in terms of all of the evaluation of flaws or cracks and the evaluation of appearance. It is shown that the decorative sheets prepared in Examples 1 to 5, in which flaws or cracks are not likely to occur, are excellent in terms of the reduction in the bleedout and long-term weather resistance.

In contrast, the indentation depths of the decorative sheets prepared in Comparative Examples 1 and 2 were both 3 mm, that is, less than 4 mm. It was confirmed that the decorative sheets were poor in term of all of the evaluation of flaws or cracks and the evaluation of appearance. Furthermore, it is shown that, in the decorative sheets prepared in Comparative Examples 1 and 2, bleedout is likely to occur as a result of formation of flaws or cracks and the long-term weather resistance becomes degraded consequently.

As is understood by those skilled in the art, the decorative sheet according to the present disclosure is not limited by the description of Examples. It is to be understood that Examples and the description are merely illustrative of the principles of the present disclosure and that various modifications and improvements may be made without departing from the spirit and scope of the present disclosure. All the modifications and improvements are included in the scope of the present disclosure which is claimed and protected by the present disclosure. The scope of the present disclosure which is claimed and protected by the present disclosure includes not only the description of claims but also equivalents thereof.

### Industrial Applicability

The decorative sheet according to the present disclosure may reduce the bleedout and the degradation of long-term weather resistance and limit the degradation of appearance. Therefore, the decorative sheet according to the present disclosure may be suitably used as a decorative sheet for members used in an environment where they are exposed to direct sunlight, such as exterior members, such as an entrance door, and fittings, such as a window frame and a door.

### Reference Signs List

100: decorative sheet
10: surface protective layer
20: primer layer
30: transparent resin layer
40: adhesive layer
50: decorative layer
51: colored layer
52: design layer
60: core layer

## Claims

1. A decorative sheet comprising a core layer and a surface protective layer,
the surface protective layer including a resin, an ultraviolet absorber, and particles,
wherein an indentation depth measured in conformity with an Erichsen test method prescribed in JIS Z 2247:2006 is 4.0 mm or more.

2. The decorative sheet according to claim 1, wherein the core layer includes a polyolefin resin.

3. The decorative sheet according to claim 1 or 2, wherein the core layer has a thickness of 40 µm or more and 100 µm or less.

4. The decorative sheet according to any one of claims 1 to 3, wherein the resin included in the surface protective layer includes a cured resin formed by curing an ionizing radiation-curable resin having two or more functional groups.

5. The decorative sheet according to any one of claims 1 to 4, wherein the resin included in the surface protective layer includes a cured resin formed by curing an ionizing radiation-curable resin having a weight-average molecular weight of 1,100 or more and 7,500 or less.

6. The decorative sheet according to any one of claims 1 to 5, wherein the ultraviolet absorber is a hydroxyphenyltriazine compound represented by General Formula (1) below, 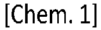 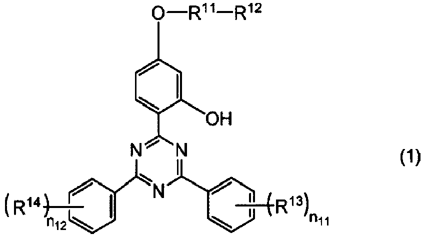 (in General Formula (1), R¹¹ represents a single bond or a divalent organic group; R¹² represents a hydrocarbon group, an ester group represented by -C(=O)OR¹⁵, an acyloxy group represented by -O-C(=O)R¹⁶, or an alkoxy group represented by -OR¹⁷; R¹³, R¹⁴, R¹⁵, R¹⁶, and R¹⁷ each independently represent a monovalent organic group; and n₁₁ and n₁₂ each independently represent an integer of 0 to 5).

7. The decorative sheet according to any one of claims 1 to 6, wherein the ultraviolet absorber includes a hydroxyphenyltriazine compound A represented by Chemical Formula (2) below and a hydroxyphenyltriazine compound B represented by Chemical Formula (3) below.

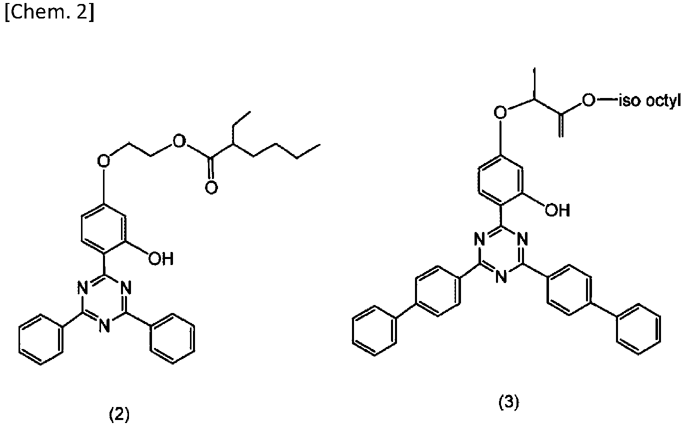

8. The decorative sheet according to any one of claims 1 to 6, wherein the ultraviolet absorber includes a hydroxyphenyltriazine compound A represented by Chemical Formula (2) below and a hydroxyphenyltriazine compound C represented by Chemical Formula (4) below.

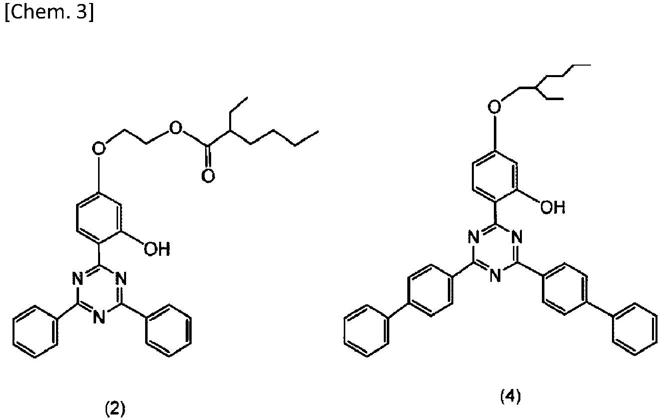

9. The decorative sheet according to any one of claims 1 to 8, comprising one or more layers selected from a decorative layer, an adhesive layer, a transparent resin layer, and a primer layer, the one or more layers being interposed between the core layer and the surface protective layer.

10. A decorative member comprising:
an adherend; and
the decorative sheet according to any one of claims 1 to 9.
